# EUROPEAN PATENT SPECIFICATION

(11) **EP 1 048 214 B1**
(45) Date of publication and mention of the grant of the patent: **08.11.2000**
(21) Application number: 99202458.8
(22) Date of filing: 26.07.1999
(51) Int. Cl.: A22C 21/06

(54) **Tool and device for removing undesired parts from the neck area of slaughtered poultry**
Werkzeug und Vorrichtung zum Entfernen unerwünschter Teile im Halsbereich von Schlachtgeflügel
Outil et dispositif pour enlever des parties indésirables dans la zone du cou de volailles abattues

(43) Date of publication of application: 02.11.2000
(73) Proprietor: STORK PMT B.V., 5831 AV Boxmeer (NL)
(72) Inventor: Terburg, Johannes Henricus Maria, 5434 RA Vianen (NL); van den Niuwelaar, Adrianus Josephes, 5421 XG Gemert (NL)
(74) Representative: Mertens, Hans Victor

(56) References cited:
- EP-A- 0 162 154
- EP-A- 0 178 825
- EP-A- 0 404 235
- EP-A- 0 516 888

## Description

The invention relates to a tool for removing undesired parts from the neck area of slaughtered poultry, comprising an elongate body which is rotatable about the centre axis thereof and is provided with a blunt front end part and engagement parts which are directed substantially in a forward direction, and in the tangential plane and in the axial direction one behind the other are distributed over at least two rows, at least the front engagement part of each row being provided with a sharpened tip which lies behind the front side of the front end part. Within the frame of the invention, the tip of the front engagement part of each row has such a sharpness that membranes, thymus glands en fat tissue of the inner neck wall are cut by the tip, while the (wall of the) crop and the wind pipe stay intact. The invention furthermore relates to a device which is provided with a number of tools according to the invention.

After the head and, via an abdominal opening, the viscera package have been removed from slaughtered poultry, undesirable residues (crop, oesophagus, wind pipe and/or attached parts) often remain behind in the neck area, and these parts have to be removed. This is achieved using the tool according to the invention, which is often referred to by the term crop drill, while the operation of removing the undesired residues is referred to by the term decropping.

Contradictory requirements are imposed on the decropping operation. On the one hand, the decropping is to be carried out sufficiently "aggressively" for the undesirable residues to be removed with a high level of certainty despite the to some extent unpredictable position of the parts which are to be removed. On the other hand, it is necessary to prevent the neck area of the poultry from being damaged during decropping. Moreover, it is important to prevent high-quality pieces of meat from being removed.

The crop drills according to the prior art can be divided into two groups. In the first group, the front engagement parts are designed as sharp teeth. In order to limit the aggressiveness of the front engagement parts, they are concealed behind the front end part, the largest rotation circle of which is larger than or equal to the rotation circle of the tips of the front engagement parts. Examples from this first group are shown in EP-A-0,178,825, Figure 6 of EP-A-0,404,235 and EP-A-0,162,154. The second group differs from the first group in that the ends of the front engagement parts, which are designed as teeth, project outside the largest rotation circle of the front end part, and the front engagement parts are of blunt design, in order to limit the aggressiveness of the front engagement parts. NL-A-8801707, Figures 3, 4 and 5 of EP-A-0,404,235 and EP-A-0,516,888 show examples from this second group.

A drawback of both groups of crop drills is that the measures which are taken in order to limit the aggressiveness of the front engagement parts are to the excessive detriment of the removal efficiency of the crop drills.

The object of the invention is to improve this situation. To this end, the tool according to the invention is characterized in that the tips of the front engagement parts lie outside the projection of the largest rotation circle of the front end part, if this lies in front of the tips of the front engagement parts.

The invention is based on the fact that the described combination of measures surprisingly makes it possible to achieve an optimum compromise between the above-described, to a certain extent contradictory requirements which are imposed on a tool of this nature. In particular, it has proven possible to use a crop drill with front engagement parts which are designed with a sharpened tip which projects outside the largest rotation circle of the front end part, which in the prior art has never been deemed possible.

Preferred embodiments are described in claims 4-9.

During use of the crop drill, the concomitant rotating downward movement and the reduced pressure lead to the crop wall being drawn against the flat side of the front engagement part. The sharpened tip of the front engagement part scrapes along the crop wall without cutting into the crop of the wind pipe.

The distance between the tips of the front engagement parts and the front end part is smaller than half the thickness of the clavicles of the poultry, in order to prevent the crop drill to engage these bones. For this purpose, in one of the preferred embodiments the tips of the front engagement parts are bent towards the central axis of the body of the crop drill.

The tool according to the invention is accommodated in a device according to claim 10 or 11.

The invention will be explained in more detail on the basis of preferred embodiments as illustrated in the appended figures, in which:
Figure 1A shows a perspective view from the side of a crop drill;
Figure 1B shows a perspective view from a different side of the crop drill according to Figure 1A;
Figure 1C shows a developed view of a component of the crop drill according to Figure lA;
Figure 1D shows a cross section through the crop drill on line ID-ID in Figure lA;
Figure 1E shows a front view, on an enlarged scale, of the crop drill, in the direction of arrow IE in Figure 1A;
Figures 2A to 2C show side views of the front section of three crop drills with alternative front end parts; and
Figures 3A to 3C show cross sections through the front end parts of the crop drills shown in Figures 2A-2C, on the respective lines IIIA-IIIA, IIIB-IIIB and IIIC-IIIC.

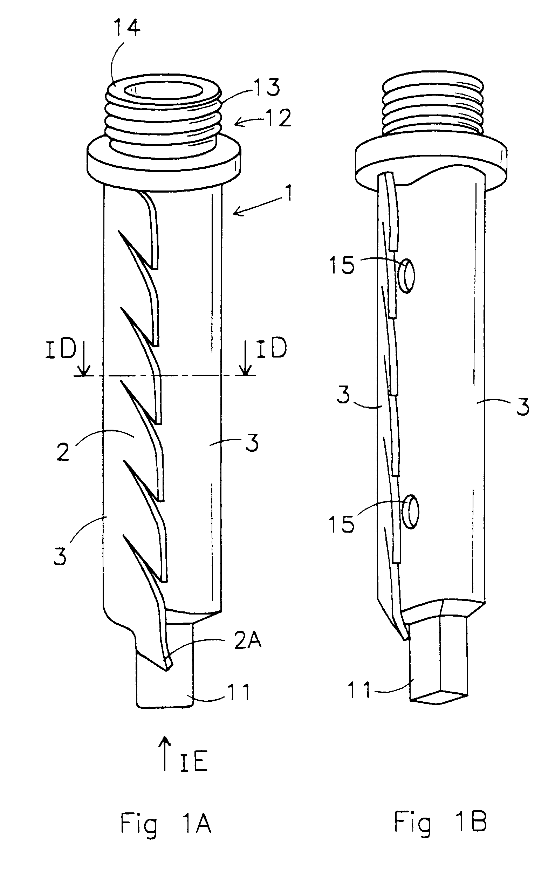

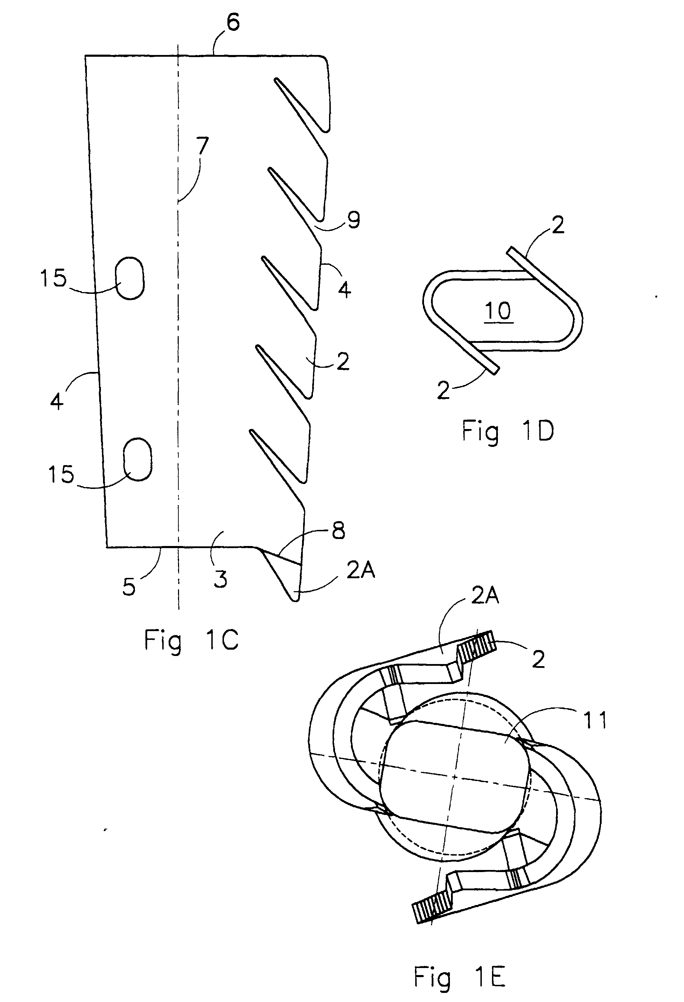

A crop drill 1 which is shown in Figures 1A to 1E comprises two rows of teeth 2, which are each formed on one of the side edges 4 of a plate 3 which is curved in a C shape. Figure 1C shows the plate 3 in its as yet unbent, developed state. The plate 3 has two side edges 4, a front edge 5 and a rear edge 6. Dashed lines indicate a first bend line 7 and a second bend line 8. Tapering grooves 9 are made in one of the two side edges, thus forming the substantially identical teeth 2, which taper to a tip, between the grooves. The fact that the teeth are identical promotes uniform action of the crop drill 1. Moreover, the similarity in shape simplifies production of the crop drill 1. The two sides edges 4 taper slightly towards the front edge 5 with respect to the first bend line 7. In the bent state, the two plates 3 are positioned in such a manner with respect to one another that sections of the plates 3 together define a hollow space 10, as indicated by Figure 1D. Due to the above-described tapering of the two sides edges 4 (cf. Figure 1C), on the one hand the tips of the teeth 2, as seen in the axial direction, are at slightly offset positions both in the tangential direction and in the radial direction, so that, when seen from the front, teeth 2 which are situated at the rear are not hidden completely behind teeth 2 which are situated at the front. On the other hand, the assembly of the two bent plates 3 tapers towards the front side. Figure 1E provides a clear illustration of this. Due to this specific positioning of the teeth with respect to one another, the effectiveness of teeth situated at the rear increases considerably compared to the situation in which there is no such tapering. As a result of limited bending of the two front teeth 2A about the second bend line 8, the tips of these teeth 2A are situated closer to the centre axis 7 than the tips of the teeth which are situated at the rear.

A rectangular front end part 11 is attached to the front edges 5 of the plates 3. The corners of this front end part are rounded. The largest transverse dimension of the front end part 11 is smaller than the distance between the tips of the two front teeth 2A. Consequently, the tips of the front teeth 2A are positioned outside (the projection of) the largest rotation circle, which is indicated in Figure 1E by a dashed line, of the front end part.

An attachment part 12 with a screw thread 13 is arranged on the rear edges 6 of the plates 3, allowing attachment to a rotatable holder (not shown in more detail) for the crop drill 1. The screw thread 13 is arranged on a hollow shaft 14 which is directly connected to the hollow space 10. By connecting this hollow shaft to a vacuum source, it is possible, via openings 15 in the plates 3, to create a reduced pressure in the space beneath the teeth 2, thus intensifying the action of the crop drill 1, in that at least some of the parts which are to be removed are sucked into and held in the operating area of the teeth 2.

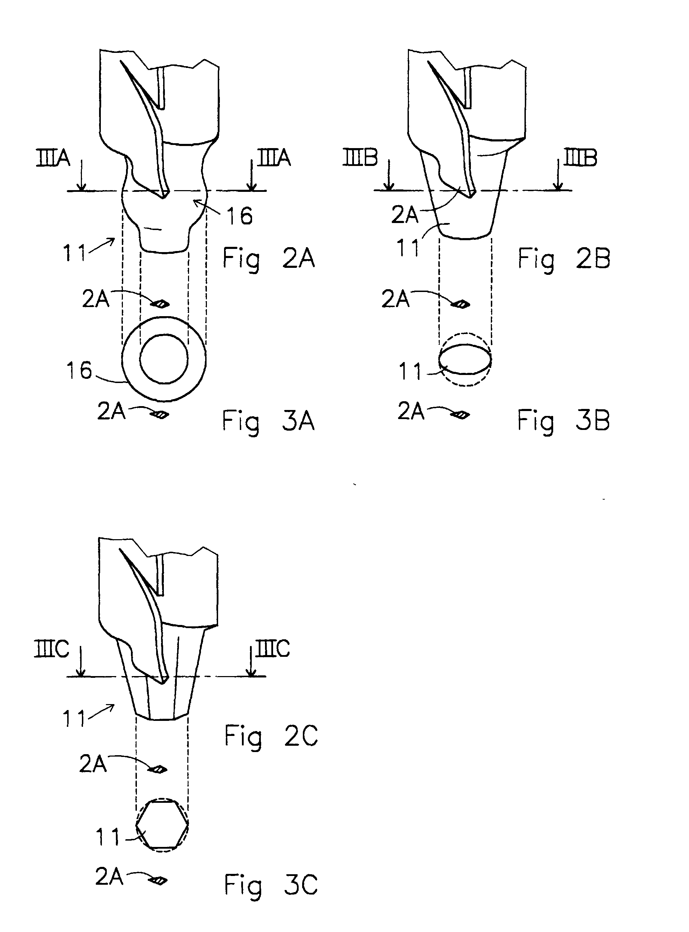

Figures 2A to 2C show the front sections of three crop drills with alternative front end parts. The cross sections illustrated in Figures 3A to 3C are selected in such a manner that the tips of the front teeth 2A just coincide with these cross sections. The end parts 11 shown in Figures 3A to 3C are respectively round, oval and hexagonal in shape. The largest rotation circle of the front end part 11 is indicated by dashed lines.

Figures 2A and 3A clearly show that the thickened section 16 of the front end part 11, which is situated just in front of the front teeth 2A, is the determining factor for establishing the projection of the largest rotation circle of the front end part 11.

During operation, the crop drill is simultaneously rotated about its longitudinal axis in the direction of the teeth and moved forwards and backwards in the longitudinal direction of the crop drill, through the neck area of slaughtered poultry.

Together with the crop drill, the holder may form part of a processing unit, a number of which are arranged on the circumference of a carrousel device, making it possible to move the processing units synchronously with poultry which are suspended from a conveyor, during which synchronous movement the decropping operation takes place. Such carrousel devices are generally known and therefore do not require any further explanation.

## Claims

1. Tool for removing undesired parts from the neck area of slaughtered poultry, comprising an elongate body (1) which is rotatable about the centre axis thereof and is provided with a blunt front end part (11) and engagement parts (2, 2A) which are directed substantially in a forward direction, and in the tangential plane and in the axial direction one behind the other are distributed over at least two rows, at least the front engagement part (2A) of each row being provided with a sharpened tip which lies behind the front side of the front end part, characterized in that the tips of the front engagement parts (2A) lie outside the projection of the largest rotation circle of the front end part (11), if this lies in front of the tips of the front engagement parts (2A).

2. Tool according to claim 1, characterized in that the tips of the front engagement parts (2A) are bent towards the centre axis.

3. Tool according to claim 2, characterized in that a number of engagement parts (2) of a row are provided with a tip, and only the tips of the front engagement parts (2A) are bent towards the centre axis.

4. Tool according to claim 1, characterized in that all engagement parts (2, 2A) are provided with a tip.

5. Tool according to claim 4, characterized in that the tip is sharpened.

6. Tool according to any of the preceding claims, characterized in that the engagement parts (2, 2A) as seen in the tangential direction are at offset positions with respect to adjacent engagement parts in the same row.

7. Tool according to any of the preceding claims, characterized in that the engagement parts are identical.

8. Tool according to any of the preceding claims, characterized in that the rotatable body (1) is essentially tapered.

9. Tool according to any of the preceding claims, characterized in that the body (1) comprises a hollow space which can be connected to a source of reduced pressure, which space has openings (15) in the area between the engagement parts (2, 2A) and the centre axis.

10. Device for removing undesired pieces from the neck area of slaughtered poultry, comprising a number of processing units, each processing unit being provided with at least one tool according to any of the preceding claims, as well as with drive means for rotating said tool and moving it in the axial direction.

11. Device according to claim 10, characterized in that the processing units are accommodated in a carrousel device.

## Patentansprüche

1. Werkzeug zum Entfernen unerwünschter Teile aus dem Halsbereich geschlachteten Geflügels, mit einem länglichen Körper (1), der um seine Mittelachse drehbar ist und ein stumpfes Frontende (11) sowie Eingriffsteile (2, 2A) besitzt, die nach vorne ausgerichtet sowie in der Tangentialebene und in axialer Richtung einer hinter dem anderen über mindestens zwei Reihen verteilt sind, wobei zumindest das vordere Eingriffsteil (2A) jeder Reihe mit einer geschärften Spitze ausgerüstet ist, die hinter der Vorderseite des Frontendes (11) liegt, **dadurch gekennzeichnet**, daß die Spitzen der vorderen Eingriffsteile (2A) außerhalb der Projektion des größten Rotationskreises des Frontendes (11) liegen, wenn dieses sich vor den Spitzen der vorderen Eingriffsteile (2A) befindet.

2. Werkzeug nach Anspruch 1, **dadurch gekennzeichnet**, daß die Spitzen der vorderen Eingriffsteile (2A) in Richtung auf die Mittelachse gebogen sind.

3. Werkzeug nach Anspruch 2, **dadurch gekennzeichnet**, daß mehrere Eingriffsteile (2) einer Reihe mit einer Spitze versehen sind und nur die Spitzen der vorderen Eingriffsteile (2A) zur Mittelachse hin umgebogen sind.

4. Werkzeug nach Anspruch 1, **dadurch gekennzeichnet**, daß alle Eingriffsteile (2, 2A) mit einer Spitze versehen sind.

5. Werkzeug nach Anspruch 4, **dadurch gekennzeichnet**, daß die Spitzen geschärft sind.

6. Werkzeug nach einem der vorangehenden Ansprüche, **dadurch gekennzeichnet**, daß die Eingriffsteile (2, 2A) in tangentialer Richtung gesehen bezüglich benachbarter Eingriffsteile derselben Reihe versetzt sind.

7. Werkzeug nach einem der vorangehenden Ansprüche, **dadurch gekennzeichnet**, daß die Eingriffsteile identisch sind.

8. Werkzeug nach einem der vorangehenden Ansprüche, **dadurch gekennzeichnet**, daß der Drehkörper (1) sich verjüngend ausgebildet ist.

9. Werkzeug nach einem der vorangehenden Ansprüche, **dadurch gekennzeichnet**, daß der Körper (1) einen Hohlraum besitzt, der an Unterdruck angeschlossen werden kann und im Bereich zwischen den Eingriffsteilen (2, 2A) und der Mittelachse Öffnungen (15) aufweist.

10. Vorrichtung zum Entfernen unerwünschter Teile aus dem Halsbereich geschlachteten Geflügels mit einer Anzahl von Bearbeitungseinheiten, von denen jede mit mindestens einem Werkzeug gemäß einem der vorangehenden Ansprüche ausgerüstet und mit Antriebsmitteln zum Rotieren des Werkzeugs und zu seiner Bewegung in axialer Richtung versehen ist.

11. Vorrichtung nach Anspruch 10, **dadurch gekennzeichnet**, daß die Bearbeitungseinheiten in einer Karusselleinrichtung untergebracht sind.

## Revendications

1. Outil pour enlever des parties indésirables de la zone du cou de volailles abattues, comprenant un corps allongé (1) qui peut tourner autour de son axe central et qui comprend une partie terminale frontale mousse (11) et des parties d'attaque (2, 2A) qui sont dirigées pratiquement vers l'avant et qui, dans le plan tangent et dans la direction axiale, sont réparties l'une derrière l'autre sur au moins deux rangées, au moins la partie d'attaque avant (2A) de chaque rangée ayant un bout tranchant qui est situé derrière le côté frontal de la partie terminale frontale, caractérisé en ce que les bouts des parties d'attaque avant (2A) sont situés à l'extérieur de la projection du plus grand cercle décrit par la partie terminale frontale (11) dans sa rotation, si celle-ci se trouve en avant des bouts des parties d'attaque avant (2A).

2. Outil selon la revendication 1, caractérisé en ce que les bouts des parties d'attaque avant (2A) sont coudés en direction de l'axe central.

3. Outil selon la revendication 2, caractérisé en ce qu'un certain nombre de parties d'attaque (2) d'une rangée comportent un bout et que seuls les bouts des parties d'attaque avant (2A) sont coudés en direction de l'axe central.

4. Outil selon la revendication 1, caractérisé en ce que toutes les parties d'attaque (2, 2A) comportent un bout.

5. Outil selon la revendication 4, caractérisé en ce que le bout est tranchant.

6. Outil selon l'une des revendications précédentes, caractérisé en ce que, vues dans la direction tangentielle, les parties d'attaque (2, 2A) sont décalées par rapport aux parties d'attaque adjacentes dans la même rangée.

7. Outil selon l'une des revendications précédentes, caractérisé en ce que les parties d'attaque sont identiques.

8. Outil selon l'une des revendications précédentes, caractérisé en ce que le corps tournant (1) est essentiellement conique.

9. Outil selon l'une des revendications précédentes, caractérisé en ce que le corps (1) comporte un espace creux qui peut être raccordé à une source de pression réduite, lequel espace a des ouvertures (15) dans la zone comprise entre les parties d'attaque (2, 2A) et l'axe central.

10. Dispositif pour enlever des parties indésirables de la zone du cou de volailles abattues, comprenant plusieurs unités de traitement, chaque unité de traitement comprenant au moins un outil selon l'une des revendications précédentes, ainsi que des moyens d'entraînement pour faire tourner ledit outil et le déplacer dans la direction axiale.

11. Dispositif selon la revendication 10, caractérisé en ce que les unités de traitement sont logées dans un carrousel.
